# NOUVEAU FASCICULE DE BREVET EUROPEEN

(11) **EP 1 961 924 B2**
(45) Date de publication et mention de la décision concernant l'opposition: **10.05.2023**
(45) Mention de la délivrance du brevet: 16.11.2016
(21) Numéro de dépôt: 08101810.3
(22) Date de dépôt: 20.02.2008
(51) Int. Cl.: F01D 25/20

(54) **Moteur comprenant un système de lubrification et procédé de lubrification de secours pour moteur**
Schmierungsvorrichtung sowie Notschmierverfahren für einen Motor
Engine lubrication system and emergency lubrication method for an engine

(30) Priorité: 21.02.2007 FR 0701236
(43) Date de publication de la demande: 27.08.2008
(73) Titulaire: Safran Aircraft Engines, 75015 Paris (FR)
(72) Inventeur: GALIVEL, Jean-Pierre, 77176, SAVIGNY LE TEMPLE (FR)
(74) Mandataire: Gevers & Orès

(56) Documents cités:
- FR-A- 2 373 678
- FR-A- 2 685 758
- GB-A- 704 020
- GB-A- 2 075 134
- US-A- 4 038 815
- US-A- 4 599 862
- US-A- 4 888 947
- US-A- 5 568 984

## Description

La présente invention se rapporte à un moteur et procédé de lubrification de secours pour un moteur, et plus particulièrement pour un moteur du type à turbine à gaz, tel qu'un turboréacteur.

On entend par moteur tout dispositif générant du mouvement, de préférence par combustion d'un fluide carburant, tels que, par exemple, un moteur à pistons alternatifs, à cycle Otto ou Diesel, à pistons rotatifs, par exemple du type Wankel, à turbine, comme par exemple, un turbopropulseur ou turboréacteur à simple ou double flux, un moteur électrique alimenté par une pile à combustible, etc. De tels moteurs peuvent être utilisés pour la propulsion d'un véhicule ou pour d'autres applications, telles que la génération d'énergie électrique, l'actionnement de machines, telles que, par exemple des pompes ou des compresseurs, etc.

Les moteurs de l'état de la technique comportent conventionnellement un système de lubrification destiné à la lubrification et éventuellement au refroidissement de paliers et engrenages dans le moteur, boîte d'engrenages d'entraînement des équipements y comprise.

Un tel système de lubrification conventionnel est généralement composé d'un réservoir de fluide lubrifiant, par exemple de l'huile, une canalisation d'alimentation et de retour et une pompe de fluide lubrifiant pour faire circuler le lubrifiant du réservoir vers les éléments à lubrifier et de retour vers le réservoir par ladite canalisation d'alimentation et de retour. En outre, il est généralement connu d'y inclure aussi un filtre pour s'assurer que des impuretés pouvant endommager les éléments à lubrifier ne soient pas circulés avec le fluide lubrifiant vers ces éléments à lubrifier, un échangeur thermique destiné au refroidissement du fluide lubrifiant, un diffuseur ou gicleur de fluide lubrifiant pour distribuer le fluide lubrifiant dans lesdits éléments à lubrifier et des capteurs de température et de pression afin de contrôler le fonctionnement du système.

Dans le cas d'une panne du système de lubrification, le moteur risque d'être endommagé au point de s'arrêter. Les capteurs de températures et de pressions contrôlent le bon fonctionnement du système et peuvent déclencher l'arrêt moteur, afin de protéger celui-ci des effets néfastes d'un fonctionnement sans huile.

Dans certaines applications, un tel arrêt intempestif peut être particulièrement dangereux et des mesures particulières sont prises pour l'éviter. Par exemple, dans un aéronef comportant un seul moteur pour sa propulsion, il est courant de ménager, en plus du système de lubrification principal, un dispositif de lubrification de secours, destiné à fournir à l'aéronef une autonomie supplémentaire permettant un déroutement vers un aérodrome en cas de panne du système de lubrification principal.

Dans l'état de la technique, décrit par exemple dans le brevet américain US 4.888.947, un tel dispositif de lubrification de secours comporte un accumulateur d'huile prélevée sur le système de lubrification principal pour assurer la lubrification minimale requise et prolonger le fonctionnement du moteur pendant une durée déterminée, typiquement 20 minutes, après une défaillance du système de lubrification principal. Ce dispositif de lubrification de secours augmente d'autant le volume d'huile du système de lubrification principal, et donc la masse du moteur, sans pour autant avoir une utilité en dehors d'une éventuelle défaillance du système de lubrification principal. En outre, son utilisation est limitée dans le temps.

Dans un aéronef comportant plusieurs moteurs pour sa propulsion, l'arrêt d'un seul des moteurs à la suite d'une défaillance de son système de lubrification est moins dangereux, le ou les autres moteurs étant généralement suffisants pour permettre un déroutement vers un aérodrome. Néanmoins, une panne simultanée de l'ensemble des systèmes de lubrification peut conduire à la perte de l'aéronef. Ce type de défaillance simultanée a déjà été rencontré, notamment suite à des actions de maintenance erronées sur les systèmes de lubrification. L'utilisation d'un dispositif de lubrification de secours à accumulateur d'huile, comme décrit ci-dessus, n'empêcherait pas la défaillance multiple, ni l'arrêt des moteurs après la consommation de l'huile de l'accumulateur, alors que par ailleurs les moteurs peuvent encore être en parfait état de fonctionnement.

Les documents FR 2 373 678 A et EP 1 739 012 A1 décrivent des systèmes de lubrification d'un moteur.

Le problème de la présente invention est donc celui de fournir une lubrification de secours indépendante à un moteur comportant un système de lubrification principal à huile en cas de défaillance de ce système de lubrification. Cette lubrification de secours doit être fournie avec une pénalité minimale en masse, une durée d'utilisation seulement limitée par la disponibilité du fluide utilisé, et une adaptation aisée aux moteurs existants.

En outre, la présente invention doit permettre d'éliminer les risques liés à la défaillance concurrente des systèmes de lubrification dans une pluralité de moteurs. Tout ceci doit résulter dans une augmentation importante du niveau de sécurité.

Conformément à l'invention, la défaillance du système de lubrification est détectée et, en réponse à la détection de cette défaillance, au moins une partie du fluide carburant du moteur est prélevée pour lubrifier au moins un élément du moteur.

Quoique des systèmes de lubrification aient été proposés, par exemple dans US 5.568.984, pour lubrifier et éventuellement refroidir un moteur avec le fluide carburant de celui-ci, de tels systèmes de lubrification, qui sont utilisés notamment dans des réacteurs utilisés pour la propulsion de missiles, sont destinés à lubrifier le moteur en situation normale et non pas en cas de défaillance d'un autre système de lubrification. Sur base de ces publications, il n'aurait donc pas été évident pour l'homme du métier d'appliquer cette solution pour résoudre le problème de la lubrification de secours en cas de défaillance d'un système de lubrification principal. Par ailleurs, ces systèmes de lubrification avec un fluide carburant en situation normale ne permettent d'assurer qu'une lubrification modeste comparée à celle obtenue avec un système de lubrification avec de l'huile.

De préférence, dans le procédé de l'invention, ladite partie de fluide carburant du moteur prélevée pour la lubrification de secours est dirigée dans au moins une enceinte dans le moteur, et ladite enceinte dans le moteur est drainée afin d'en éviter un sur-remplissage quand le fluide carburant s'ajoute à l'huile du système de lubrification principal dans ladite enceinte.

De préférence, dans ce procédé, en réponse à la détection de cette défaillance, le moteur est aussi mis dans un régime de sécurité limitant son domaine de fonctionnement. Ceci permet de limiter le nombre d'éléments du moteur nécessitant cette lubrification de secours en cas de défaillance du système de lubrification principal et donc aussi la quantité de fluide carburant employé pour cette lubrification de secours et les moyens nécessaires pour le prélever.

Le dispositif de lubrification de secours de l'invention comporte des moyens de détection d'une défaillance du système de lubrification principal, des moyens de prélèvement d'au moins une partie d'un fluide carburant du moteur pour la diriger vers au moins un élément du moteur destiné à être lubrifié, et des moyens de commande aptes à être connectés audits moyens de détection et de prélèvement pour activer lesdits moyens de prélèvement en réponse à une défaillance du système de lubrification principal.

De préférence, lesdits moyens de détection comportent au moins un capteur basse pression d'huile, qui constitue un moyen particulièrement simple pour détecter une défaillance du système de lubrification principal.

Afin de mieux lubrifier les éléments à lubrifier, il est préférable que lesdits moyens de prélèvement débitent dans au moins un gicleur. Si par ailleurs ledit gicleur comporte au moins un gicleur du système de lubrification principal, on évite de dupliquer des éléments, résultant dans un gain de masse avantageux.

De préférence, lesdits moyens de prélèvement comportent une canalisation de prélèvement avec au moins une première vanne. Une telle première vanne possède l'avantage de facilement permettre de connecter et déconnecter le dispositif de lubrification de secours à un circuit d'alimentation en fluide carburant du moteur afin d'en prélever au moins une partie.

De préférence, le dispositif de lubrification de secours comporte aussi des moyens de drainage d'au moins une enceinte dans le moteur, lesdits moyens de commande étant aussi aptes à être connectés audits moyens de drainage pour activer lesdits moyens de drainage en réponse à une défaillance du système de lubrification principal. Ces moyens de drainage permettent d'éviter un sur-remplissage de cette enceinte quand le fluide carburant s'ajoute à l'huile du système de lubrification principal dans ladite enceinte.

De préférence, lesdits moyens de drainage comportent une canalisation de drainage avec au moins une deuxième vanne. Une telle deuxième vanne possède l'avantage de facilement permettre de drainer ladite enceinte avec un signal desdits moyens de commande.

Avantageusement, lesdites première et deuxième vannes sont fonctionnellement liées, de façon à ce que le prélèvement du fluide carburant pour la lubrification soit toujours associé au drainage desdites enceintes. Dans ce mode de réalisation, de préférence, lesdites première et deuxième vannes sont intégrées dans une vanne double à commande unique, ce qui permet de simplifier le dispositif de lubrification de secours, tout en s'assurant de ce que le prélèvement du fluide carburant pour la lubrification soit toujours associé au drainage desdites enceintes.

Plus particulièrement, lesdits moyens de drainage comportent au moins une conduite d'évacuation, débouchant, par exemple, dans un flux d'air moteur ou bien dans une zone éloignée du moteur, ce qui permet de drainer l'huile et le fluide carburant de l'enceinte dans une zone ne présentant pas de danger.

L'invention se rapporte aussi à un moteur comportant un système de lubrification principal à huile et un dispositif de lubrification de secours selon l'invention. En particulier, ledit moteur est un moteur du type à turbine à gaz, type de moteur dont les besoins en lubrification sont particulièrement élevés.

L'invention se rapporte aussi à un véhicule comportant un moteur selon l'invention. Les véhicules ont un besoin particulièrement critique de fiabilité des moteurs, et particulièrement des moteurs assurant la propulsion des véhicules. Ce besoin est encore plus critique dans les aéronefs.

Des détails concernant l'invention sont décrits ci-après faisant référence aux dessins.

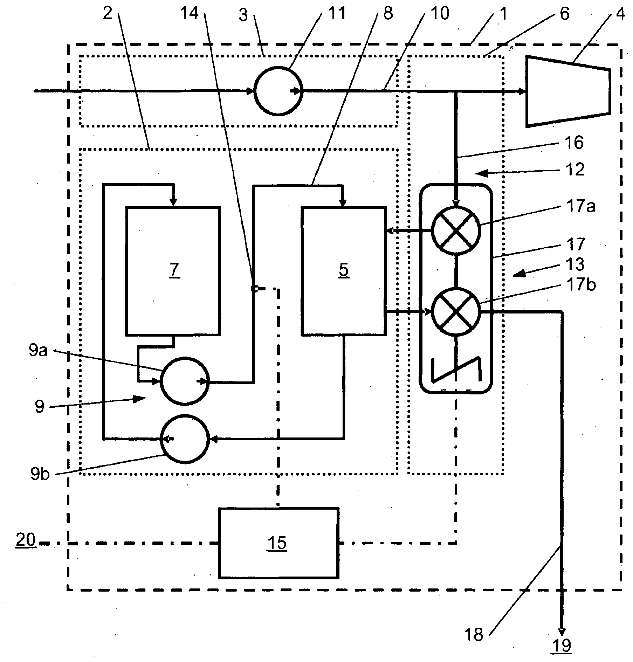

La figure unique représente schématiquement un mode de réalisation du moteur de l'invention avec le système de lubrification principal et le dispositif de lubrification de secours.

Le moteur 1 illustré est, par exemple, un propulseur d'aéronef, une application où la fiabilité est prioritaire. Il est toutefois concevable d'appliquer l'invention dans des moteurs pour propulser d'autres types de véhicules, ou même pour d'autres applications, telles que la génération d'énergie électrique dans un générateur embarqué ou bien fixe. Le moteur 1 illustré est par ailleurs du type à turbine à gaz, et plus particulièrement un turboréacteur, mais il est aussi concevable d'appliquer l'invention dans d'autres types de moteurs.

Le moteur 1 illustré comporte un système de lubrification principal 2, un système d'alimentation 3 pour alimenter une chambre de combustion 4 avec un fluide carburant, une enceinte 5 contenant des éléments du moteur 1 à lubrifier et refroidir, tels que des paliers et/ou des engrenages, et un dispositif de lubrification de secours 6.

Le système de lubrification principal 2 fournit, en fonctionnement, un fluide lubrifiant pour lubrifier les éléments dans l'enceinte 5. Pour ceci, le système de lubrification principal 2 comporte un réservoir 7, une canalisation 8 d'alimentation et de retour et une pompe 9, comportant, dans le mode de réalisation illustré, une pompe d'alimentation 9a et une pompe de retour 9b. Dans le mode de réalisation illustré, le fluide lubrifiant est de l'huile.

Dans l'état de fonctionnement normal du système de lubrification principal 2, la pompe 9 fait circuler l'huile par la canalisation 8 du réservoir 7 vers l'enceinte 5 et de retour vers le réservoir 7. En plus des éléments illustrés, le système de lubrification principal 2 peut comporter aussi un filtre pour s'assurer que des impuretés pouvant endommager les éléments à lubrifier ne soient pas circulés avec le fluide lubrifiant vers ces éléments à lubrifier, un échangeur thermique destiné au refroidissement du fluide lubrifiant, un diffuseur ou gicleur de fluide lubrifiant pour distribuer le fluide lubrifiant dans l'enceinte 5 et des capteurs de température et de pression 14 afin de contrôler la pression et la température du fluide lubrifiant, ce qui permet de détecter un mauvais fonctionnement du circuit 8 et des vannes dans la canalisation 8 pour contrôler la circulation du fluide lubrifiant en réponse à sa température et pression.

Le système d'alimentation 3 comporte notamment une canalisation de fluide carburant 10 et une pompe de fluide carburant 11. Ce système d'alimentation 3 est régulé par un système de contrôle du fonctionnement du moteur 1 et fournit une pression et un débit de fluide carburant permettant le fonctionnement du moteur 1.

Le dispositif de lubrification de secours 6 comporte des moyens de prélèvement de fluide carburant 12, des moyens de drainage 13, un capteur basse pression 14 installé dans la canalisation 8 du système de lubrification principal 2 et des moyens de commande 15 connectés au capteur basse pression 14.

Les moyens de prélèvement 12 comportent une canalisation de prélèvement 16 raccordée à la canalisation de fluide carburant 10 et débouchant dans l'enceinte 5, éventuellement dans des gicleurs qui peuvent être les gicleurs du système de lubrification principal 2 et/ou des gicleurs indépendants, adaptés en fonction de la viscosité du fluide carburant et de la pression et du débit nécessaires pour la lubrification de secours. Le dispositif de lubrification de secours 6 ne doit pas nécessairement fournir du fluide carburant vers tous les éléments du moteur 1 normalement lubrifiés par le système de lubrification principal 2, mais peut se limiter à fournir du fluide carburant pour lubrifier les éléments du moteur 1 nécessitant une telle lubrification pour éviter un arrêt du moteur 1 tournant dans un régime de sécurité.

Les moyens de prélèvement 12 comportent, en outre, sur la canalisation de prélèvement 16, une première vanne 17a à commande électrique ou mécanique et connectée aux moyens de commande 15, de manière à ouvrir ou fermer le débit de fluide carburant à travers la canalisation de prélèvement 16 en réponse à des signaux des moyens de commande 15.

Les moyens de drainage 13 comportent une canalisation de drainage 18 reliée à l'enceinte 5 et débouchant à l'extérieur par au moins une conduite d'évacuation 19. Ladite conduite d'évacuation 19 est située dans une zone où l'évacuation des fluides lubrifiant et/ou carburant ne présente pas de danger. Par exemple, dans un turboréacteur double-flux entouré d'une nacelle, ladite conduite d'évacuation 19 peut être située dans le flux d'air moteur ou hors de la nacelle, ou dans un système de récupération communément connu sous le nom de « Ecologie box ».

Les moyens de drainage 13 comportent en outre une deuxième vanne 17b à commande électrique ou mécanique et connectée aux moyens de commande 15, de manière à ouvrir ou fermer le débit de fluide drainé à travers la canalisation de drainage 18 en réponse à des signaux des moyens de commande 15.

Dans le mode de réalisation illustré, la première vanne 17a et la deuxième vanne 17b sont intégrées dans une vanne double 17 à commande unique contrôlée par les moyens de commande 15.

En cas de défaillance du système de lubrification principal 2, le capteur basse pression 14 signale la défaillance aux moyens de commande 15. En réponse à ce signal, les moyens de commande 15 commandent alors l'ouverture de la vanne double 17, de manière à prélever sur la canalisation de fluide carburant 10, au moins une partie du fluide carburant pour lubrifier des éléments du moteur 1 et à drainer l'enceinte 5 pour éviter son sur-remplissage. Le drainage entraînera dans un premier temps une vidange d'un mélange d'huile et de fluide carburant, puis uniquement de fluide carburant.

En réponse au signal du capteur basse pression 14, les moyens de commande peuvent aussi déclencher une alarme pilote 20 et/ou mettre le moteur 1 dans un régime de sécurité. Dans un tel régime de sécurité, la vitesse, les couples moteurs ou forces ou la puissance générée par le moteur peuvent par exemple être limitées afin de limiter les échauffements par friction à prendre en compte pour le dimensionnement du dispositif de lubrification de secours. Ceci permet de limiter le nombre d'éléments du moteur 1 à lubrifier par le moyen du dispositif de lubrification de secours 6 en cas de défaillance du système de lubrification principal 2. Dans ce régime de sécurité, et avec la lubrification de secours avec le fluide carburant, un aéronef propulsé par le moteur 1 aura une plus grande marge de manoeuvre pour décider un déroutement sur un aérodrome de secours.

Dans un autre mode de réalisation, les première et/ou deuxième vannes 17a, 17b peuvent être commandées par un système de vanne automatique réagissant à une variation de pression anormale et représentative d'une défaillance du système de lubrification principal, ce qui permet de se passer du capteur basse pression 14 et des moyens de commande 15 séparés.

Le dispositif de lubrification de secours 6 étant sensiblement indépendant du système de lubrification principal 2, son dimensionnement pourra être adapté aux nécessités d'un bon fonctionnement. A part la possibilité de limitation du nombre d'éléments lubrifiés par le dispositif de lubrification de secours 6 en fonction des limitations du régime de sécurité et d'adaptation des gicleurs à la viscosité du fluide carburant et à la pression et au débit du dispositif de lubrification de secours 4, il est aussi possible d'interposer dans la canalisation de prélèvement 16 des moyens de régulation de pression indépendants, tels qu'un diaphragme et/ou un limiteur de pression.

Quoique la présente invention ait été décrite en se référant à des exemples de réalisation spécifiques, il est évident que des modifications peuvent être apportées sur ces exemples sans sortir de la portée générale de l'invention telle que définie par les revendications. Par conséquent, la description doit être considérée dans un sens illustratif plutôt que descriptif.

### REFERENCES DES FIGURES

- 1: Moteur
- 2: Système de lubrification principal
- 3: Système d'alimentation
- 4: Chambre de combustion
- 5: Enceinte
- 6: Dispositif de lubrification de secours
- 7: Réservoir
- 8: Canalisation
- 9: Pompe
- 9a: Pompe d'alimentation
- 9b: Pompe de retour
- 10: Canalisation de fluide carburant
- 11: Pompe de fluide carburant
- 12: Moyens de prélèvement
- 13: Moyens de drainage
- 14: Capteur basse pression
- 15: Moyens de commande
- 16: Canalisation de prélèvement
- 17: Vanne double
- 17a: Première vanne
- 17b: Deuxième vanne
- 18: Canalisation de drainage
- 19: Conduite d'évacuation
- 20: Alarme pilote

## Revendications

1. Procédé pour la lubrification de secours d'un moteur (1) en cas de défaillance d'un système de lubrification principal (2) à huile de ce moteur (1), où ladite défaillance est détectée ; **caractérisé par le fait qu'**en réponse à la détection de cette défaillance, au moins une partie d'un fluide carburant du moteur (1) est prélevée pour lubrifier au moins un élément du moteur (1).

2. Procédé selon la revendication 1, **caractérisé par le fait que** ladite partie de fluide carburant du moteur (1) est dirigée dans au moins une enceinte (5) dans le moteur (1), et cette enceinte (5) est drainée afin d'éviter un sur-remplissage.

3. Procédé selon une des revendications 1 ou 2, **caractérisé par le fait qu'**en réponse à la détection de cette défaillance, le moteur (1) est mis dans un régime de sécurité limitant son domaine de fonctionnement.

4. Moteur (1) comportant un système de lubrification principal (2) à huile et un système de lubrification de secours (6), ledit dispositif de lubrification de secours (6) comportant des moyens de détection d'une défaillance du système de lubrification principal (2) à huile, **caractérisé par le fait qu'il** comporte, en outre, des moyens de prélèvement (12) d'au moins une partie d'un fluide carburant du moteur (1) pour le diriger vers au moins un élément du moteur (1) destiné à être lubrifié et des moyens de commande (15) aptes à être connectés audits moyens de prélèvement (12) et de détection.

5. Moteur selon la revendication 4, dont lesdits moyens de détection comportent au moins un capteur basse pression (14).

6. Moteur selon une des revendications 4 ou 5, dont lesdits moyens de prélèvement (12) débitent dans au moins un gicleur.

7. Moteur selon la revendication 6, dont ledit gicleur comporte au moins un gicleur du système de lubrification principal (2).

8. Moteur selon une des revendications 4 à 7, dont lesdits moyens de prélèvement (12) comportent une canalisation de prélèvement (16) avec au moins une première vanne (17a).

9. Moteur selon une des revendications 4 à 8, comportant aussi des moyens de drainage (13) d'au moins une enceinte (5) dans le moteur (1), lesdits moyens de commande (15) étant aussi aptes à être connectés auxdits moyens de drainage (13).

10. Moteur selon la revendication 9, dont lesdits moyens de drainage (13) comportent une canalisation de drainage (18) avec au moins une deuxième vanne (17b).

11. Moteur selon les revendications 8 et 10, dont lesdites première et deuxième vannes (17a, 17b) sont fonctionnellement liées.

12. Moteur selon la revendication 11, dont lesdites première et deuxième vannes (17a, 17b) sont intégrées dans une vanne double (17) à commande unique.

13. Moteur selon une des revendications 9 à 12, dont lesdits moyens de drainage (13) comportent au moins une conduite d'évacuation (19), débouchant, par exemple, dans un flux d'air moteur ou bien dans une zone éloignée du moteur (1).

14. Moteur (1) selon l'une des revendications 4 à 13 du type à turbine à gaz.

15. Véhicule comportant au moins un moteur selon l'une des revendications 4 à 13.

16. Aéronef comportant au moins un moteur selon l'une des revendications 4 à 14.

## Patentansprüche

1. Verfahren zur Notschmierung eines Motors (1) im Fall des Ausfalls eines Hauptölschmiersystems (2) des Motors (1), wo der Ausfall erfasst wird; **dadurch gekennzeichnet, dass** als Reaktion auf die Erfassung des Ausfalls mindestens ein Teil einer Kraftstoffflüssigkeit des Motors (1) entnommen wird, um zumindest ein Element des Motors (1) zu schmieren.

2. Verfahren nach Anspruch 1, **dadurch gekennzeichnet, dass** der Teil der Kraftstoffflüssigkeit des Motors (1) zu mindestens einer Kammer (5) in dem Motor (1) geleitet wird, und dass die Kammer (5) abgelassen wird, um eine Überfüllung zu vermeiden.

3. Verfahren nach einem der Ansprüche 1 oder 2, **dadurch gekennzeichnet, dass** als Reaktion auf die Erfassung des Ausfalls der Motor (1) in ein Sicherheitsregime gebracht wird, der seinen Betriebsbereich beschränkt.

4. Motor (1) mit einem Hauptölschmiersystem (2) und einem Notschmiersystem (6), wobei die Notschmiervorrichtung (6) Mittel zur Erfassung eines Ausfalles des Hauptölschmiersystems (2) umfasst, **dadurch gekennzeichnet, dass** er ferner Mittel zur Entnahme (12) von zumindest einem Teil einer Kraftstoffflüssigkeit des Motors (1), um sie zu zumindest einem Element des Motors (1) zu leiten, das dazu vorgesehen ist, geschmiert zu werden, und Mittel zum Steuern (15) umfasst, die geeignet sind, mit den Mitteln zur Entnahme (12) und zur Erfassung verbunden zu werden.

5. Motor nach Anspruch 4, wobei die Mittel zur Erfassung zumindest einen Niederdrucksensor (14) umfassen.

6. Motor nach einem der Ansprüche 4 oder 5, wobei die Mittel zur Entnahme (12) in wenigstens eine Düse fördern.

7. Motor nach Anspruch 6, wobei die Düse wenigstens eine Düse des Hauptschmiersystems (2) umfasst.

8. Motor nach einem der Ansprüche 4 bis 7, wobei die Mittel zur Entnahme (12) eine Leitung zur Entnahme (16) mit mindestens einem ersten Ventil (17a) umfassen.

9. Motor nach einem der Ansprüche 4 bis 8, der auch Mittel zur Ableitung (13) von mindestens einer Kammer (5) in den Motor (1) umfasst, wobei die Mittel zur Steuerung (15) ebenfalls geeignet sind, mit den Mitteln zur Ableitung (13) verbunden zu werden.

10. Motor nach Anspruch 9, wobei die Mittel zur Ableitung (13) eine Ableitung (18) mit mindestens einem zweiten Ventil (17b) umfassen.

11. Motor nach den Ansprüchen 8 und 10, wobei das erste und das zweite Ventil (17a, 17b) funktionsfähig verbunden sind.

12. Motor nach Anspruch 11, wobei das erste und das zweite Ventil (17a, 17b) in einem Doppelventil (17) mit einer einzelnen Steuerung integriert sind.

13. Motor nach einem der Ansprüche 9 bis 12, wobei die Mittel zur Ableitung (13) wenigstens eine Abführleitung (19) umfassen, die beispielsweise in einem Strom der Motorluft oder in einem Bereich entfernt von dem Motor (1) mündet.

14. Motor (1) nach einem der Ansprüche 4 bis 13 vom Typ mit einer Gasturbine.

15. Fahrzeug mit mindestens einem Motor nach einem der Ansprüche 4 bis 13.

16. Luftfahrzeug mit mindestens einem Motor nach einem der Ansprüche 4 bis 14.

## Claims

1. Method for the emergency lubrication of an engine (1) in the event of failure of the main oil lubrication system (2) of this engine (1), wherein said failure is detected; **characterised in that** in response to the detection of this failure, at least one portion of the fuel fluid of the engine (1) is sampled to lubricate at least one component of the engine (1).

2. Method accordingto Claim 1, **characterised in that** said portion of fuel fluid of the engine (1) is directed into at least one chamber (5) in the engine (1), and this chamber (5) is drained in order to prevent overfilling.

3. Method according to any one of Claims 1 or 2, **characterised in that** in response to the detection of this failure, the engine (1) is put into a safety regime limiting its field of operation.

4. Engine (1) comprising a main oil lubrication system (2) and an emergency lubrication system (6), said emergency lubricating device (6) comprising the means for detecting a failure of the main oil lubrication system (2), **characterised in that** it further comprises the means of sampling (12) at least one portion of the fuel fluid of the engine (1) to direct it toward at least one component of the engine (1) intended to be lubricated and control means (15) capable of being connected to said means of sampling (12) and detection.

5. Engine according to Claim 4, wherein said detection means comprises at least one low-pressure sensor (14).

6. Engine according to any one of Claims 4 or 5, wherein said sampling means (12) discharges into at least one nozzle.

7. Engine according to Claim 6, wherein said nozzle comprises at least one nozzle of the main lubrication system (2).

8. Engine according to any one of Claims 4 to 7, wherein said sampling means (12) comprises a sampling line (16) with at least one valve (17a).

9. Engine according to any one of Claims 4 to 8, also comprising the drainage means (13) of at least one chamber (5) in the engine (1), said control means (15) also being capable of being connected to said drainage means (13).

10. Engine according to Claim 9, wherein said drainage means (13) comprises a drainage line (18) with at least a second valve (17b).

11. Engine according to Claims 8 and 10, wherein said first and second valves (17a, 17b) are operationally linked.

12. Engine according to Claim 11, wherein said first and second valves (17a, 17b) are integrated within a double valve (17) with single control.

13. Engine according to any one of Claims 9 to 12, wherein said drainage means (13) comprises at least one discharge line (19), leading, for example, into an engine air flow or into an area remote from the engine (1).

14. Engine (1) according to any one of Claims 4 to 13 of gas turbine type.

15. Vehicle comprising at least one engine according to any one of Claims 4 to 13.

16. Aircraft comprising at least one engine according to any one of Claims 4 to 14.
